# EUROPEAN PATENT APPLICATION

(11) **EP 0 860 386 A1**
(43) Date of publication of application: **26.08.1998**
(21) Application number: 96203055.7
(22) Date of filing: 04.11.1996
(51) Int. Cl.: B65G 47/244

(54) **Method and apparatus for positioning of articles**

(71) Applicant: UNILEVER N.V., 3000 DK Rotterdam (NL)
(72) Inventor: The designation of the inventor has not yet been filed
(74) Representative: Sikken, Antonius H. J. M.

(57) **Abstract**

Method and apparatus for positioning slab-like articles (1,17,18) on a conveyor belt (2). The articles (1,17,18) are engaged from above by pivoting means (13) moving along with the conveyor (2) but (at least over some part of the path or travel) with a substantially lower speed than the conveyor (2). Engagement of the article (1,17,18) is effected on a point remote from the centre of gravity and if the article (1,17,18) is triangular preferably on a median thereof.

## Description

The present invention relates to a method according to the preamble of claim 1.

Such a method is known from US-A-5,101,960. In this patent specification a method is disclosed for turning an article 90° for purposes where two conveyance paths are perpendicular to each other. To that end pivot means are provided below the conveyor surface near the inner angle of the two intersecting conveyance paths. If the article is at the end of its movement of the first conveyance path the pivot means are lifted so as to rotate the article over 90° to be correctly positioned on the second conveyance path. After this movement is effected the pivoting means are retracted and the article can continue its movement.

In the food industry and many other technical areas it is desirable to position articles on a rectilinear belt. Such articles are fed to such a belt in at least one first position and should leave this belt in another second position. For effecting a rotating movement guiding means are proposed which are stationary or move alongside the belt and engaging edges of the articles. Such repositioning can be effective but if the articles are not sufficiently strong, or coherent, or cannot be engaged at their edges this method cannot be used. Another approach is to place two belts above each other wherein the angle between those belts corresponds with the angle of rotation of the articles. This method is effective and can be used with most kinds of articles. However, this takes quite some space because of the presence of two conveyors being with an angle relative to each other.

Another approach to position relatively weak articles is to start from relatively rigid slabs of material, to position them and then to further roll them. During rolling relatively weak products are obtained but because they are already positioned this is not disadvantageous. However, an additional rolling device is necessary. Such a method is for example used in production lines for backery products. An example are triangular slabs of material cut from a larger continuous slab and positioned to be fed to a roller device for obtaining 'croissants' and other backery products.

The invention aims to provide a method wherein it is possible to reposition articles which are moved along a rectilinear path and which can be effected over a short or a relatively long span so as to reduce stress on the article to be rotated.

This aim is realized with a method as described above having the characterizing features of claim 1. The invention is based on the idea that by engaging the articles from above there is no hindrance from the conveyor on which the articles are placed.

According to a preferred embodiment of the invention the pivot means move along with said article over said conveyance path in the same direction as the direction of conveyance and with a speed substantially lower than the speed of conveyance. This way within a relative long path for the rotation can be effected. This way allows accurate positioning and/or relatively high speed of movement of the conveyor. This in contrast to US-A-5,101,960 wherein the pivot means are stationary. This path is according to a preferred embodiment at least three times the length of the article.

Dependent on the length of the article the path in which rotation is effected can be at least about 0,5 meter.

The speed of the pivot means along with the conveyor can be dependent from their position relative to the conveyor according to a preferred embodiment of the invention. In such an embodiment during a first stage the speed is substantially equal to the speed of the conveyor and in this stage engagement between the pivot means and the article is realized. During a second stage the speed is substantially lower and during such a stage positioning is effected. In a final stage disengagement is realised and during this stage the speed of the pivot means is substantially the same as the speed of the conveyor.

The method described above can for example be used in a handling line for bakery products, such as a handling line in which triangular shaped parts are cut from a sheet and repositioned. After cutting it it is necessary to provide a spacing between the articles so cut.

To effect optimum rotation of the articles preferably the point of engagement is remote from its centre of gravity.

The method according to the invention can be realized such that starting from an initial position wherein the articles are positioned adjacent to each other, for example immediately after cutting them from a web, during conveying, they are spaced from each other, for example to provide room to effect rotation.

Following the method as described above it is possible to effect final positioning of the slab-like articles, for example by abutting of sides of slab-like articles which should be positioned in a predetermined direction with regard to the conveyor but against a then stationary removable but later abutment being positioned in said predetermined direction.

The invention also relates to an apparatus for positioning of slab-like articles according to the preamble of claim 9 and has the characterising features of this claim. The pivot means comprise a longitudinal drive member extending in the same direction as the conveyor, to which engagement members are connected which can be lowered and raised to the upper surface of the article to be rotated. Such lifting and raising is realised according to a preferred embodiment of the invention by having the drive embodied as a belt loop. The return run of such a belt loop is positioned above the working run.

The longitudinal drive can be intermittently operated by control means.

To realise spacing of articles which are adjacent to each other upstream from the apparatus according to the invention preferably a feed conveyor is provided which is used in combination with the apparatus according to the invention running at a lower speed than the conveyor of the subject apparatus.

The invention will be further elucidated referring to the enclosed drawing showing a preferred embodiment of the invention. In the drawings:
Fig. 1 shows a perspective side view of the apparatus according to the invention;
Fig. 2 shows a plan view of the apparatus according to the invention;
Fig. 3 shows a perspective longitudinal drive in more detail; and
Fig. 4 shows spacing and rotating of a number of triangular articles.

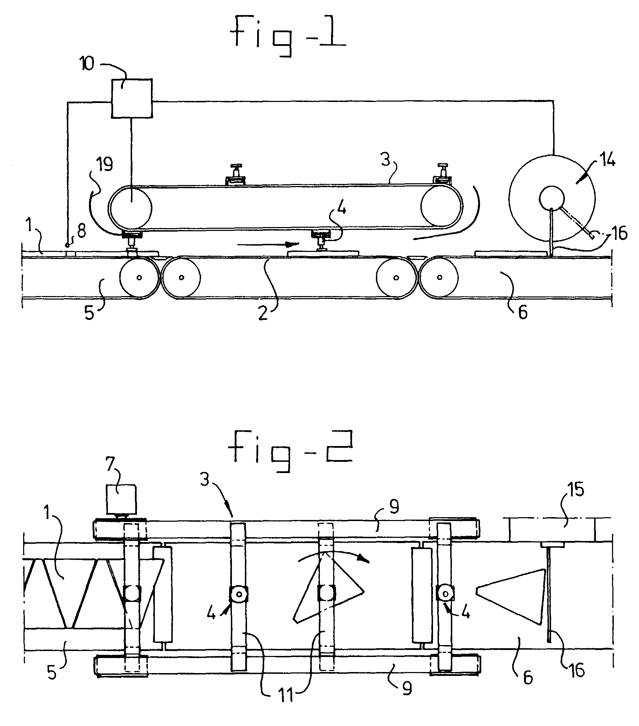

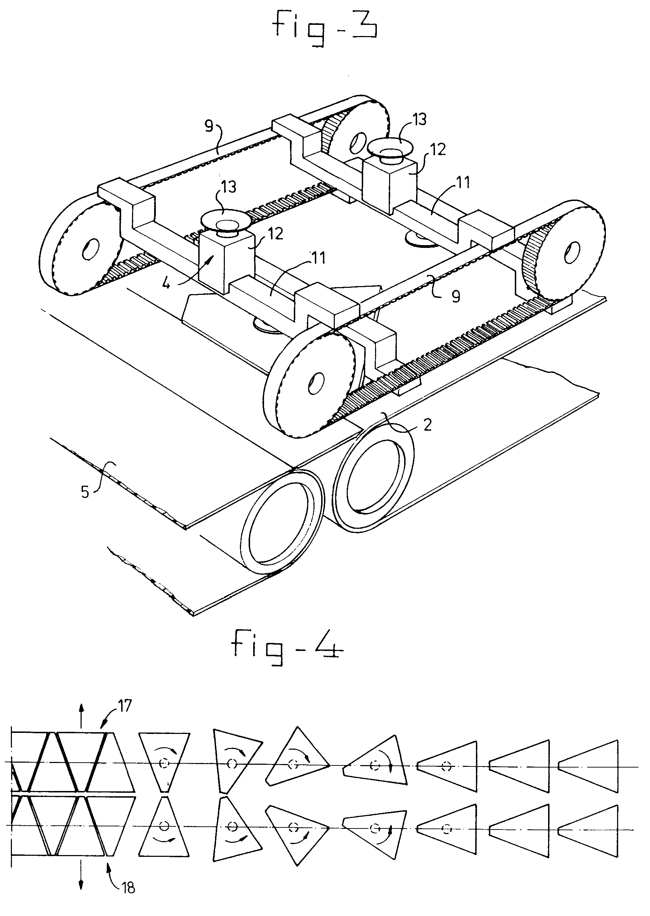

In figures 1 and 2 the apparatus of the invention is schematically shown. It comprises a conveyor 2 for transporting triangular articles, such as food products 1. Conveyor 2 is present between a feed conveyor 5 and a discharge conveyor 6. Conveyer 2 is operated with a constant speed. Above conveyor 2 a longitudinal drive comprising a belt loop 3 is provided. Belt loop 3 is driven by motor 7 the space of which is controlled by control 10 according to a predetermined program. Sensor means 8 are connected to control means 10 and act to start the program. Belt loop 3 comprises two parallel belts 9 as is shown in fig. 3 between which cross bars 11 are provided. In the centre of each cross bar 11 an engagement member 4 is present comprising a block 12 and a cup 13 wherein cup 13 can rotate relative to block 12.

Discharge belt 6 is provided with a final positioning device 14, comprising a rotatable roller also controlled by control 10 through its motor 15 and having baffles 16.

In fig. 4 schematically the first most important part of positioning is elucidated. Starting from a sheet of material two sections 17 and 18 are cut and separated. Each section 17 and 18 is already provided with further cuts to define substantially triangular articles 1. Belt 5 moves one of those sections with a relatively low speed. Because the speed of belt 2 is higher articles 1 of a section are spaced from each other to provide a room to position them after a 90° turn behind each other as is shown in fig. 4. In the trajectory of conveyor 5, article 1 is detected by sensor 8 which triggers movement of belt loop 3 and cup 13 is moved together with the associated parts into engagement with article 1. Belt loop 3 is moved with about the same speed as belt 5 over a restricted part of their trajectory. Because the speed of belt 2 is higher slippage and pivoting will occur resulting in positioning as is shown in fig. 2. However, it is also possible to effect an intermittent movement of belt loop 3. After the article is in the correct position at the end of belt 2 disengagement between cup 13 and the related article is effected. Final adjustment is realised by baffle 16 which is stationary for a short while and during which the article abuts this baffle after that article 1 is discharged through belt 6.

Although the invention has been described referring to a preferred embodiment of the invention it will be immediately clear for the person skilled in the art that many obvious changes can be effected without leaving the scope of protection as defined in the enclosed claims.

## Claims

1. Method for positioning of slab-like articles, such as food product slabs, comprising placing said articles with its lower face on a conveyor and moving said article along a conveyance path, engaging said slab during conveyance by pivot means to turn said articles, characterized in that said conveyor path is substantially rectilinear, and in that said pivot means engage said articles on their upper face.

2. Method according to claim 1, wherein said pivot means move along with said article over said conveyance path in the same direction as the direction of conveyance and with an average speed substantially lower than the speed of conveyance.

3. Method according to one of the preceding claims, wherein said pivot means engage said articles over a part of the conveyance path being at least three times the length of said articles.

4. Method according to claim 2 or 3, wherein said pivot means engage said articles over at least 0,5 m of the conveyance path.

5. Method according to one of the preceding claims, wherein the pivot means move with a speed dependent from its position relative to the conveyor, wherein during a first stage the speed is substantially equal to the speed of the conveyor during which stage engagement is effected and a second subsequent stage wherein the speed of the pivot means is substantially lower than the speed of the conveyor and during which stage positioning is realised.

6. Method according to claim 5, comprising a third stage subsequent to the second stage during which the speed of the pivot means is substantially equal to the speed of the conveyor and during which stage disengagement is effected.

7. Method according to the previous claims, wherein the point of engagement on the article is remote from the centre of gravity of said article .

8. Method according to one of the previous claims, wherein the articles are positioned adjacent to each other in the starting position and spaced from each other during conveyance.

9. Method according to one of the preceding claims, wherein downstream of said positioning of said slab-like articles further positioning is effected.

10. Apparatus for positioning of slab-like articles (1) such as food products slabs, comprising a conveyor for receiving said articles and pivot means provided adjacent to said conveyor to rotate said articles, characterised in that, said pivot means comprise a longitudinal drive movable in the same direction as the conveyor, wherein on said drive an engagement member (4) is provided acting in a direction substantially perpendicular to the face of said conveyor on said article.

11. Apparatus according to claim 10, wherein said longitudinal drive comprises a belt loop (3).

12. Apparatus according to claim 11, wherein said loop is positioned above said conveyor.

13. Apparatus according to one of the claims 10-12, wherein said longitudinal drive comprises an intermittent drive.

14. Apparatus according to one of the claims 10-13, wherein control means (10) are provided which control the longitudinal drive dependent from the presence and position of an article.

15. Apparatus according to one of the claims 10-14, wherein a feed conveyor (5) is provided upstream of said conveyor (2) and transporting said articles with a substantially lower speed than said conveyor (2).

16. Apparatus according to one of the claims 10-15, wherein downstream of said longitudinal drive comprising pivot means further positioning means are provided comprising an abutment face which can be placed in and removed from the path of conveyance of the slab-like articles.
